# FASCICULE DE BREVET EUROPEEN

(11) **EP 4 468 656 B1**
(45) Date de publication et mention de la délivrance du brevet: **07.05.2025**
(21) Numéro de dépôt: 24177839.8
(22) Date de dépôt: 24.05.2024
(51) Int. Cl.: H04L 9/40

(54) **PASSERELLE DE COMMUNICATION AVEC FILTRAGE AMÉLIORÉ, AÉRONEF, PROCÉDÉ DE FILTRAGE ET PROGRAMME D'ORDINATEUR ASSOCIÉS**
KOMMUNIKATIONSGATEWAY MIT VERBESSERTER FILTERUNG, FLUGZEUG, FILTERUNGSVERFAHREN UND COMPUTERPROGRAMM DAFÜR
COMMUNICATION GATEWAY WITH IMPROVED FILTERING, ASSOCIATED AIRCRAFT, FILTERING METHOD AND COMPUTER PROGRAM

(30) Priorité: 25.05.2023 FR 2305192
(43) Date de publication de la demande: 27.11.2024
(73) Titulaire: Thales, 92190 Meudon (FR)
(72) Inventeur: MONNIER, Stéphane, 33700 MERIGNAC (FR); DESCARGUES, Gilles, 31036 TOULOUSE (FR); NOINSKI, Alexandre, 33700 MERIGNAC (FR)
(74) Mandataire: Lavoix

(56) Documents cités:
- US-A1- 2010 199 083
- US-A1- 2011 218 701
- US-A1- 2017 289 189

## Description

La présente invention concerne une passerelle électronique de communication destinée à être embarquée à bord d'un aéronef.

L'invention concerne également un aéronef comprenant une telle passerelle de communication.

La présente invention concerne aussi un procédé de filtrage de message(s) de données au sein d'une installation de communication avionique destinée à être embarquée à bord d'un aéronef, le procédé de filtrage étant mis en œuvre par une telle passerelle de communication.

L'invention concerne également un programme d'ordinateur comportant des instructions logicielles qui, lorsqu'elles sont exécutées par un ordinateur, mettent en œuvre un tel procédé de filtrage.

L'invention concerne plus particulièrement un avion, tout en étant applicable à tout type d'aéronef, tel qu'un hélicoptère ou un drone.

L'invention concerne en particulier le domaine de la cyber sécurité dans un contexte avionique.

Un aéronef comporte classiquement des systèmes avioniques permettant d'aider le pilotage de l'aéronef, tels qu'un système de gestion de vol, ou FMS (de l'anglais *Flight Management System*) ; un système de guidage, ou FG (de l'anglais *Flight Guidance*) ; un système de commandes de vol, ou FCS (de l'anglais *Flight Control System*) ; etc. Ces systèmes avioniques échangent entre eux des informations grâce à un réseau de communication de l'aéronef, lesquels font partie d'une installation de communication au sein de l'aéronef, incluant généralement d'autres systèmes que les systèmes avioniques. L'installation de communication comprend notamment des systèmes mettant en œuvre des fonctions relatives à la compagnie aérienne exploitant l'aéronef, tel qu'un système de maintenance, ou CMS (de l'anglais *Centralized Maintenance System*) ; ou un système de gestion de la cabine passagers.

Les systèmes avioniques sont regroupés dans un domaine, dit domaine avionique, auquel correspond un niveau de sécurité (de l'anglais *security level*) requis le plus élevé de l'installation de communication de l'aéronef afin de garantir que le fonctionnement des fonctions mises en œuvre par les systèmes avioniques ne risque pas d'être perturbé par des communications avec des équipements extérieurs au domaine avionique. Le niveau de sécurité requis pour les autres équipements est moins élevé que le niveau de sécurité requis pour le domaine avionique.

L'installation de communication est par exemple conforme au standard ARINC 811 qui définit différents domaines ayant des niveaux de sécurité différents dans un installation de communication d'un aéronef, notamment : un domaine ACD (de l'anglais *Aircraft Control Domain*) correspondant au domaine avionique précité ; un domaine AISD (de l'anglais *Airline Information Services Domain*) comprenant des équipements mettant en oeuvre les fonctions relatives à la compagnie aérienne (maintenance, gestion de la cabine, etc.) ; et un domaine PIESD (de l'anglais *Passenger Information and Entertainement Services Domain*) relatif au divertissement et à l'information des passagers.

Conformément au standard ARINC 811, le niveau de sécurité du domaine ACD correspond à un niveau de sécurité (de l'anglais *safety level*) le plus élevé de l'installation de communication de l'aéronef car les fonctions mises en oeuvre par les équipements du domaine ACD peuvent être essentielles pour le contrôle du vol de l'aéronef. Le niveau de sécurité du domaine AISD est moins élevé que celui du domaine ACD, les fonctions mises en oeuvre dans le domaine AISD étant moins essentielles, au moins à court terme, pour le contrôle du vol de l'aéronef. Le niveau de sécurité du domaine PIESD est moins élevé que le niveau de sécurité du domaine AISD.

L'invention concerne alors l'apport d'informations dans le domaine avionique certifié, tel que le domaine ACD, depuis le domaine ouvert non certifié, notamment depuis le domaine AISD.

L'échange d'informations d'un domaine ayant un niveau de sécurité moins élevé vers un domaine ayant un niveau de sécurité plus élevé est très fortement restreint afin de ne pas compromettre la sécurité du domaine ayant le niveau de sécurité le plus élevé. En particulier, le transfert d'informations d'un domaine, dit domaine ouvert et correspondant à l'extérieur du domaine ACD, vers le domaine ACD est fortement restreint afin de ne pas compromettre la sécurité du domaine ACD.

Pour répondre à ce besoin de passerelle de sécurité entre le domaine ouvert et le domaine avionique de niveau de sécurité plus élevé, le document EP 3 585 030 A1 décrit une passerelle de communication comprenant une barrière d'un premier type pour filtrer les informations issues du domaine ouvert de façon à laisser entrer lesdites informations dans un domaine de communication seulement si elles correspondent à une communication authentifiée, une barrière d'un deuxième type pour filtrer des informations transmises du domaine de communication vers le domaine avionique en réalisant au moins un filtrage syntaxique desdites informations. La passerelle de communication est également configurée pour effectuer ensuite un filtrage sémantique desdites informations.

Toutefois, une telle passerelle de sécurité n'est pas optimale, notamment en termes d'un temps de traitement nécessaire pour la réalisation du filtrage.

Le but de l'invention est alors de proposer une passerelle électronique de communication destinée à être embarquée à bord d'un aéronef, permettant de réduire le temps de traitement nécessaire pour la réalisation du filtrage, notamment pour être plus efficace vis-à-vis d'un risque de cyberattaque visant à entraîner un dysfonctionnement des systèmes avioniques.

A cet effet, l'invention a pour objet une passerelle électronique de communication destinée à être embarquée à bord d'un aéronef, la passerelle comprenant :
- un module d'acquisition configuré pour acquérir au moins un message de données ; chaque message étant selon un protocole de communication et comportant un en-tête et une partie utile incluant une pluralité de champs successifs ;
- un module de filtrage connecté en sortie du module d'acquisition et configuré pour filtrer chaque message acquis respectif, en validant ledit message s'il respecte un jeu de critère(s) de filtrage et en le bloquant dès qu'un critère de filtrage dudit jeu n'est pas respecté ;
- un module de transmission connecté en sortie du module de filtrage et configuré pour transmettre, à un destinataire correspondant, chaque message validé par le module de filtrage ;

le module de filtrage comportant :
   - une unité de génération configurée pour générer une table principale pour chaque message acquis ; la table principale représentant un arbre des champs de la partie utile dudit message selon un ensemble de niveaux associé au protocole de communication, l'arbre comportant une ou plusieurs branches ;
   - une unité de calcul configurée pour calculer, pour chaque message acquis, une table dictionnaire et au moins une table auxiliaire parmi une première table auxiliaire, une deuxième table auxiliaire et une troisième table auxiliaire ;
la table dictionnaire comportant, pour chacun des niveaux, une liste de valeur(s) fixe(s) contenue(s) dans ledit message, chaque valeur fixe appartenant à un ensemble de valeurs prédéfinies associé au protocole de communication ;
la première table auxiliaire comportant, pour chacun des niveaux et chaque valeur fixe de la table dictionnaire, un identifiant de chacun du ou des champs contenant ladite valeur fixe ;
la deuxième table auxiliaire comportant, pour chaque branche du message, une liste des valeurs fixes contenues dans les champs de ladite branche ; et
la troisième table auxiliaire comportant, pour chacun des niveaux, une liste de valeur(s) représentative(s) de valeur(s) variable(s) contenue(s) dans ledit message, chaque valeur variable étant distincte de l'ensemble de valeurs prédéfinies associé au protocole de communication ; et
le module de filtrage est configuré pour utiliser l'au moins une table auxiliaire pour la mise en œuvre de critère(s) de filtrage.

Avec la passerelle de communication selon l'invention, l'utilisation d'au moins une table auxiliaire pour la mise en œuvre de critère(s) de filtrage permet alors de déterminer beaucoup plus rapidement où se trouve le champ ou bien la valeur sur lequel le critère de filtrage est à appliquer. En effet, chaque critère de filtrage est mis en œuvre en accédant à ce champ ou à cette valeur directement via l'au moins une table auxiliaire, plutôt qu'en ayant à chaque fois à parcourir intégralement le message faisant l'objet du filtrage.

L'homme du métier comprendra alors que le gain en temps de traitement est d'autant plus important que le message est long, c'est-à-dire comporte une quantité importante de données dans sa partie utile. À titre d'exemple, dans le domaine avionique, un plan de vol formant un seul message peut présenter une taille allant typiquement jusqu'à 64 kilooctets.

Le gain en temps de traitement croit également avec le nombre de critères de filtrage à appliquer à un même message.

La première table auxiliaire permet de détecter plus efficacement la présence ou non d'une valeur prédéfinie donnée dans le message, et si une telle valeur est présente d'abord en outre le nombre d'occurrences de cette valeur.

La deuxième table auxiliaire permet d'appliquer plus efficacement un filtre sur un motif particulier de champs dans le message.

La troisième table auxiliaire permet de filtrer plus efficacement les valeurs variables dans le message.

Suivant d'autres aspects avantageux de l'invention, la passerelle de communication comprend une ou plusieurs des caractéristiques suivantes, prises isolément ou suivant toutes les combinaisons techniquement possibles :
- le module de filtrage est configuré pour utiliser au moins deux tables auxiliaires distinctes parmi la première table auxiliaire, la deuxième table auxiliaire et la troisième table auxiliaire pour la mise en œuvre de critère(s) de filtrage ;

le module de filtrage étant de préférence configuré pour utiliser chacune des tables auxiliaires parmi la première table auxiliaire, la deuxième table auxiliaire et la troisième table auxiliaire pour la mise en œuvre de critère(s) de filtrage ;
   - l'unité de calcul est configurée en outre pour ordonner selon un ordre monotone les listes des valeurs fixes de la deuxième table auxiliaire, en commençant par comparer la première valeur fixe de chacune des listes, puis en passant successivement aux valeurs suivantes desdites listes ;
   - la table dictionnaire comporte, pour chaque valeur fixe, un identifiant de ladite valeur fixe ; et dans la deuxième table auxiliaire, pour chaque branche du message, la liste des valeurs fixes est stockée sous forme d'une liste des identifiants desdites valeurs fixes ;
   - l'unité de calcul est configurée en outre pour calculer chaque valeur représentative de valeur variable en appliquant une opération OU-EXCLUSIF à ladite valeur variable ;
   - la troisième table auxiliaire comporte en outre, pour chaque valeur représentative de valeur(s) variable(s), l'identifiant de chacun du ou des champs contenant une valeur variable représentée par ladite valeur représentative ;
   - l'aéronef comporte une installation de communication compartimentée en un domaine avionique et un domaine ouvert externe au domaine avionique, l'installation de communication comportant plusieurs systèmes avioniques appartenant au domaine avionique, un ou plusieurs appareils électroniques appartenant au domaine ouvert, la passerelle étant apte à être connectée entre le ou les appareils électroniques et les systèmes avioniques,
le domaine avionique est un domaine correspondant à un niveau de sécurité le plus élevé à bord de l'aéronef ;
le domaine avionique étant de préférence le domaine ACD selon la norme ARINC 811 du 20 décembre 2005.

L'invention concerne également un aéronef comprenant une installation de communication compartimentée en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, et une passerelle électronique de communication connectée entre le ou les appareils électroniques et les systèmes avioniques, la passerelle de communication étant telle que définie ci-dessus.

L'invention concerne aussi un procédé de filtrage de message(s) de données au sein d'une installation de communication avionique destinée à être embarquée à bord d'un aéronef, le procédé de filtrage étant mis en œuvre par une passerelle électronique de communication et comprenant les étapes suivantes :
- acquisition d'au moins un message de données ; chaque message étant selon un protocole de communication et comportant un en-tête et une partie utile incluant une pluralité de champs successifs ;
- filtrage de chaque message acquis respectif, en validant ledit message s'il respecte un jeu de critère(s) de filtrage et en le bloquant dès qu'un critère de filtrage dudit jeu n'est pas respecté ;
- transmission, à un destinataire correspondant, de chaque message validé ;

l'étape de filtrage comportant les sous-étapes suivantes :
   - génération d'une table principale pour chaque message acquis ; la table principale représentant un arbre des champs de la partie utile dudit message selon un ensemble de niveaux associé au protocole de communication, l'arbre comportant une ou plusieurs branches ;
   - calcul, pour chaque message acquis, d'une table dictionnaire et d'au moins une table auxiliaire parmi une première table auxiliaire, une deuxième table auxiliaire et une troisième table auxiliaire ;
la table dictionnaire comportant, pour chacun des niveaux, une liste de valeur(s) fixe(s) contenue(s) dans ledit message, chaque valeur fixe appartenant à un ensemble de valeurs prédéfinies associé au protocole de communication ;
la première table auxiliaire comportant, pour chacun des niveaux et chaque valeur fixe de la table dictionnaire, l'identifiant de chacun du ou des champs contenant ladite valeur fixe ;
la deuxième table auxiliaire comportant, pour chaque branche du message, une liste des valeurs fixes contenues dans les champs de ladite branche ; et
la troisième table auxiliaire comportant, pour chacun des niveaux, une liste de valeur(s) représentative(s) de valeur(s) variable(s) contenue(s) dans ledit message, chaque valeur variable étant distincte de l'ensemble de valeurs prédéfinies associé au protocole de communication ; et
l'au moins une table auxiliaire est utilisée pour la mise en œuvre de critère(s) de filtrage.

L'invention concerne également un programme d'ordinateur comportant des instructions logicielles qui, lorsqu'elles sont exécutées par un ordinateur, mettent en œuvre un procédé de filtrage tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un aéronef selon l'invention comprenant une installation de communication compartimentée en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, et une passerelle électronique de communication connectée entre le ou les appareils électroniques et les systèmes avioniques ;
- la figure 2 est une représentation schématique d'un arbre des champs de la partie utile d'un message acquis par la passerelle et d'une table principale générée par la passerelle et représentant ledit arbre ; et
- la figure 3 est un organigramme d'un procédé, selon l'invention, de filtrage de message(s) de données au sein de l'installation de communication avionique de la figure 1, le procédé étant mis en oeuvre par la passerelle électronique de communication.

Les expressions « sensiblement égal(e) à » et « de l'ordre de » définissent une relation d'égalité à plus ou moins 20%, de préférence à plus ou moins 10%, et de préférence encore à plus ou moins 5%.

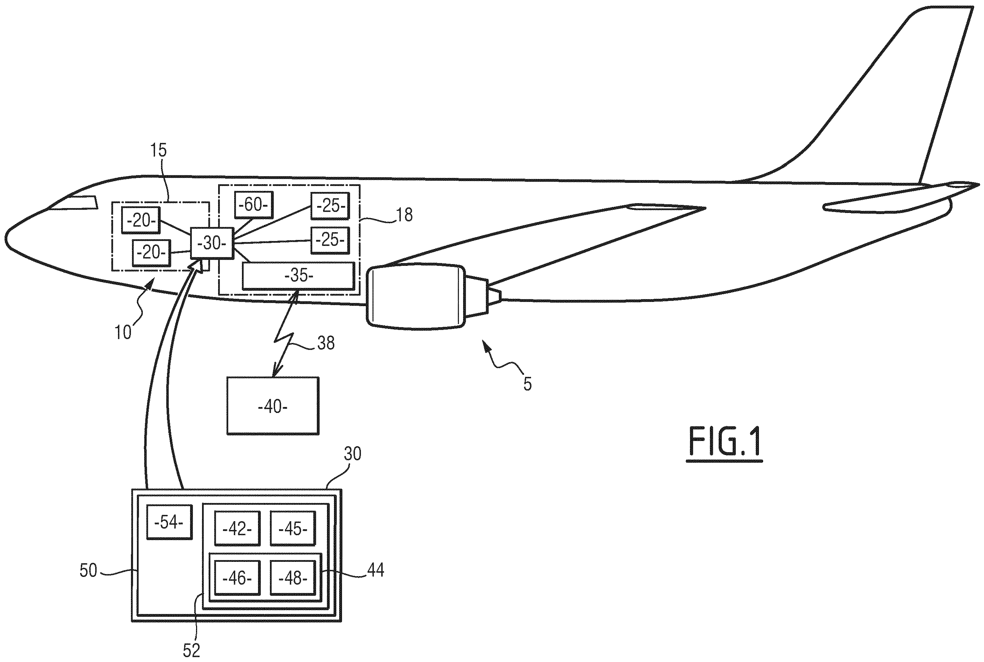

Sur la figure 1, un aéronef 5 comprend une installation de communication 10 compartimentée en un domaine avionique 15 et un domaine ouvert 18, externe au domaine avionique 15.

L'installation de communication 10 comporte plusieurs systèmes avioniques 20 appartenant au domaine avionique 15 ; ainsi qu'un ou plusieurs appareils électroniques 25, externes au domaine avionique 15 et appartenant au domaine ouvert 18 ; et une passerelle électronique de communication 30 connectée entre le ou les appareils électroniques 25 et les systèmes avioniques 20. Dans l'exemple de la figure 1, l'installation de communication 10 comporte plusieurs appareils électroniques 25, chacun appartenant au domaine ouvert 18.

En complément, l'installation de communication 10 comprend en outre un serveur de communication 35 communiquant via une liaison de communication 38 avec au moins un équipement électronique 40, externe à l'aéronef 5.

Le domaine avionique 15 est un domaine correspondant à un niveau de sécurité le plus élevé à bord de l'aéronef 5, en particulier le niveau de sécurité requis le plus élevé de l'installation de communication 10 de l'aéronef 5.

Le domaine avionique 15 est alors un domaine pour limiter un risque de perturbation - par au moins une communication avec un appareil ou dispositif électronique externe au domaine avionique 15 - de fonction(s) mise(s) en oeuvre par l'au moins un système avionique 25 du domaine avionique 15. Le domaine avionique 15 inclut le ou les systèmes avioniques 25.

Le domaine avionique 15 est typiquement le domaine ACD selon la norme ARINC 811 du 20 décembre 2005.

Le domaine ouvert 18 est un domaine auquel correspond un niveau de sécurité moins élevé que le niveau de sécurité du domaine avionique 15. Le domaine ouvert 18 inclut le ou les appareils électroniques 25.

Chaque système avionique 20 est embarqué à bord de l'aéronef 5 et appartient au domaine avionique 15. Chaque système avionique 20 est connu en soi, également appelé calculateur avionique, et est configuré pour mettre en œuvre une ou plusieurs fonctions avioniques respectives.

Chaque système avionique 20 est par exemple choisi parmi le groupe consistant en : un système de gestion du vol, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite GNSS (de l'anglais *Global Navigation Satellite System*), tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prevention System*) ; et un radioaltimètre, également noté RA (de l'anglais *RadioAltimeter).*

Chaque appareil électronique 25 appartenant au domaine ouvert 18 ne met pas en œuvre une fonction avionique respective, et ne nécessite alors généralement pas de faire l'objet d'une certification spécifique.

La passerelle électronique de communication 30, appelée par la suite passerelle de communication 30 ou encore passerelle 30, est en interface entre le domaine ouvert 18 et le domaine avionique 15. Un message de données transmis entre le domaine ouvert 18 et le domaine avionique 15, c'est-à-dire depuis le domaine ouvert 18 vers le domaine avionique 15, ou inversement depuis le domaine avionique 15 vers le domaine ouvert 18, transite alors nécessairement par la passerelle de communication 30.

La passerelle de communication 30 est également appelée passerelle de sécurité, et est configurée pour réaliser au moins un filtrage d'un message de données destiné à un système avionique 20 respectif.

La passerelle de communication 30 comprend un module 42 d'acquisition d'au moins un message de données ; un module 44 de filtrage de chaque message acquis respectif, en validant ledit message s'il respecte un jeu de critère(s) de filtrage et en le bloquant dès qu'un critère de filtrage dudit jeu n'est pas respecté, le module de filtrage 44 étant connecté en sortie du module d'acquisition 42 ; et un module 45 de transmission, à un destinataire correspondant, de chaque message validé par le module de filtrage 44, le module de transmission 45 étant connecté en sortie du module de filtrage 44. L'homme du métier comprendra qu'un jeu de critère(s) de filtrage s'entend comme un groupe de critère(s) de filtrage, ou encore un lot de critère(s) de filtrage, c'est-à-dire un ensemble d'un ou plusieurs critères de filtrage. Le module de filtrage 44 comporte une unité 46 de génération d'une table principale pour chaque message acquis et une unité 48 de calcul, pour chaque message acquis, d'une table dictionnaire TD et d'au moins une table auxiliaire TAL, TML, TAV parmi une première table auxiliaire TAL, une deuxième table auxiliaire TML et une troisième table auxiliaire TAV.

En complément facultatif, passerelle de communication 30 comprend un module (non représenté) d'obtention d'un jeu de paramètre(s) de filtrage associé au jeu de critère(s) de filtrage. L'homme du métier comprendra qu'un jeu de paramètre(s) de filtrage s'entend comme un groupe de paramètre(s) de filtrage, ou encore un lot de paramètre(s) de filtrage, c'est-à-dire un ensemble d'un ou plusieurs paramètres de filtrage.

La passerelle de communication 30 comprend par exemple une unité de traitement d'informations 50 formée typiquement d'une mémoire 52 et d'un processeur 54 associé à la mémoire 52.

Selon cet exemple, le module d'acquisition 42, le module de filtrage 44 et le module de transmission 45, ainsi qu'en complément facultatif le module d'obtention, sont réalisés chacun sous forme d'un logiciel, ou d'une brique logicielle, exécutable par le processeur 54. La mémoire 52 de la passerelle de communication 30 est alors apte à stocker un logiciel d'acquisition d'au moins un message de données ; un logiciel de filtrage de chaque message acquis respectif ; et un logiciel de transmission, à un destinataire correspondant, de chaque message validé par le logiciel de filtrage. En complément facultatif, la mémoire 52 de la passerelle de communication 30 est apte à stocker un logiciel d'obtention du jeu de paramètre(s) de filtrage associé au jeu de critère(s) de filtrage. Le processeur 54 de la passerelle de communication 30 est alors apte à exécuter chacun des logiciels parmi le logiciel d'acquisition, le logiciel de filtrage et le logiciel de transmission, ainsi qu'en complément facultatif le logiciel d'obtention.

En variante non représentée, le module d'acquisition 42, le module de filtrage 44 et le module de transmission 45, ainsi qu'en complément facultatif le module d'obtention, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque la passerelle de communication 30 est réalisée sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Le serveur de communication 35 est configuré pour communiquer via la liaison de communication 38 avec l'au moins un équipement électronique externe 40, ledit au moins un équipement électronique externe 40 étant par exemple une station au sol, ou encore un équipement informatique en nuage (de l'anglais *cloud computing*). Le serveur de communication 35 est préférentiellement connecté à la passerelle de communication 30. Le serveur de communication 35 appartient typiquement au domaine ouvert 18.

Le serveur de communication 35 est connu en soi, et comporte notamment un émetteur-récepteur, non représenté, compatible avec la liaison de communication 38. La liaison de communication 38 est typiquement une liaison radioélectrique, c'est-à-dire une liaison par ondes radioélectriques, tel qu'une liaison par satellite. L'émetteur-récepteur est alors un émetteur-récepteur radioélectrique.

L'équipement électronique externe 40 est typiquement connecté à une infrastructure informatique d'un centre de commande opérationnel, également appelé OCC (de l'anglais *Operational Control Center*). L'équipement électronique externe 40 est alors avantageusement configuré pour transmettre des données, comme par exemple un plan de vol de l'aéronef 5 et des informations relatives à l'aéronef 5, telles que sa masse, sa configuration, son équilibrage, ou encore son identifiant.

Le module d'acquisition 42 est configuré pour acquérir au moins un message de données. Le module d'acquisition 42 est par exemple configuré pour acquérir, de la part d'un appareil électronique 25 appartenant au domaine ouvert 18, au moins un message de données à destination d'un système avionique 20 respectif, appartenant au domaine avionique 15. L'appareil électronique 25, de la part duquel le message est acquis, est typiquement le serveur de communication 35, si le message est émis depuis l'équipement électronique externe 40.

Le module d'acquisition 42 est par exemple configuré pour acquérir chaque message selon un protocole de communication avionique respectif.

Le protocole de communication avionique est par exemple choisi parmi le groupe consistant en : un protocole conforme à la norme ARINC 702 ; un protocole conforme à la norme ARINC 739 ; un protocole conforme à la norme ARINC 619 ; un protocole conforme à la norme ARINC 429 ; et un protocole conforme à la norme FANS (de l'anglais *Future Air Navigation System*) A associé à l'EUROCAE ED-100.

Chaque message de données acquis comporte un en-tête (de l'anglais *header*) et une partie utile, également appelée charge utile (de l'anglais *data payload*), contenant les données utiles du message, c'est-à-dire les données à transmettre au destinataire correspondant, tel qu'un système avionique 20 correspondant.

L'en-tête comprend typiquement un préambule servant à la synchronisation du message, et comportant par exemple en outre un délimiteur pour signaler le début des informations du message ; une indication relative à la destination, telle qu'une adresse de destination, c'est-à-dire une adresse ou un identifiant du système avionique 20 destinataire du message ; une indication relative à la source, telle qu'une adresse de source, c'est-à-dire une adresse ou un identifiant de l'émetteur du message ; et un code de contrôle, tel qu'un code de contrôle de redondance cyclique ou CRC (de l'anglais *Cyclic Redundancy Check).*

La partie utile du message comporte une pluralité de champs successifs, la partie utile étant découpée, i.e. décomposée en plusieurs portions successives, chaque portion de partie utile formant un champ respectif.

Le module de filtrage 44 est configuré pour filtrer chaque message acquis respectif, en validant ledit message s'il respecte un jeu de critère(s) de filtrage et en le bloquant dès qu'un critère de filtrage dudit jeu n'est pas respecté.

Par valider le message, on entend accepter le message, c'est-à-dire autoriser le message pour transmission vers le domaine avionique 15. De par le filtrage des messages via le module de filtrage 44, la passerelle de communication 30 remplit une fonctionnalité de cyber sécurité. Autrement dit, la passerelle de communication 30 forme alors une barrière de sécurité entre le domaine ouvert 18 et le domaine avionique 15. En d'autres termes encore, l'entrée de message(s) à l'intérieur du domaine avionique 15 est sécurisée via le filtrage effectué par la passerelle de communication 30, en particulier par le module de filtrage 44.

L'unité de génération 46 est configurée pour générer la table principale TP pour chaque message acquis.

La table principale TP représente un arbre AM des champs de la partie utile dudit message selon un ensemble de niveaux N1, N2, N3, N4, N5 associé au protocole de communication.

L'ensemble de niveaux N1, N2, N3, N4, N5 comporte par exemple un niveau maximal N1, un niveau minimal N5 et un ou plusieurs niveaux intermédiaires N2, N3, N4 entre les niveaux minimal N5 et maximal N1. La partie utile inclut typiquement un champ racine de niveau maximal N1, un ou plusieurs champs feuilles de niveau minimal N5, et plusieurs champs intermédiaires d'un niveau intermédiaire N2, N3, N4 respectif, chaque champ intermédiaire ayant un unique champ père de niveau plus élevé et un ou plusieurs champs fils de niveau moins élevé. La partie utile inclut de préférence un unique champ racine de niveau maximal N1.

L'ensemble de niveaux N1, N2, N3, N4, N5 est typiquement un ensemble de niveaux associé au protocole de communication, et les niveaux N1, N2, N3, N4, N5 sont alors également appelés niveaux protocolaires.

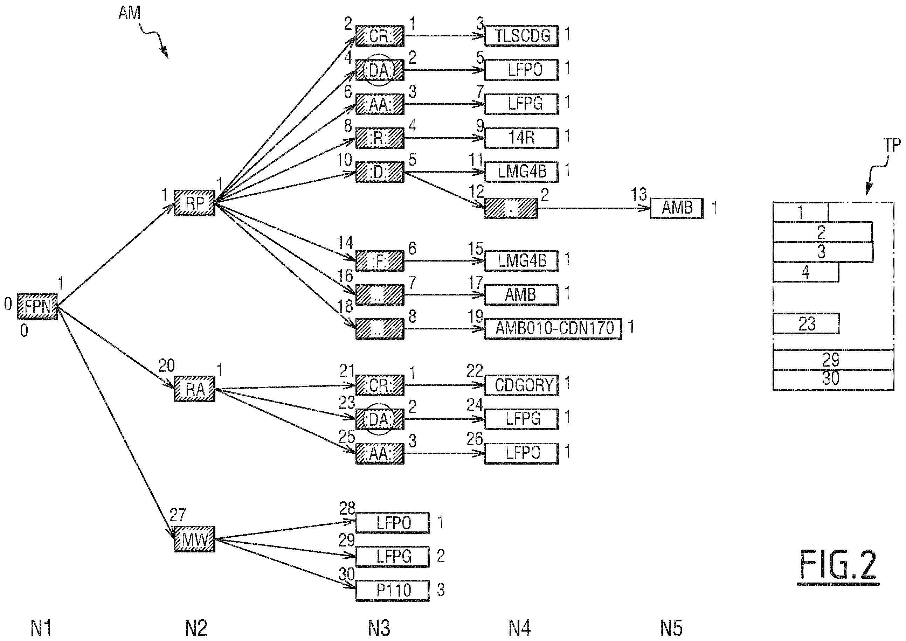

Dans l'exemple de la figure 2, l'ensemble de niveaux comporte cinq niveaux, à savoir un premier niveau N1 correspondant au niveau maximal, des deuxième N2, troisième N3 et quatrième N4 niveaux correspondant à plusieurs niveaux intermédiaires respectifs, et un cinquième niveau N5 correspondant au niveau minimal.

L'arbre AM comporte une ou plusieurs branches, chacune par exemple depuis le champ racine jusqu'à un champ feuille respectif. L'arbre AM permet de représenter un chainage des champs la partie utile. Par chainage, on entend un ensemble d'une ou plusieurs chaines, chaque chaine correspondant à une branche. Chaque branche représente une chaine respective de champs, par exemple depuis le champ racine jusqu'au champ feuille respectif.

L'unité de génération 46 est typiquement configurée pour associer un identifiant respectif à chacun des champs, puis pour déterminer les identifiants du ou des champs fils du champ racine, les identifiants du champ père et du ou des champs fils de chacun des champs intermédiaires, et l'identifiant du champ père de chaque champ feuille, et pour stocker dans la table principale TP les identifiants déterminés. L'association d'un identifiant respectif à chacun des champs est par exemple effectuée via une numérotation des champs par ordre monotone, c'est-à-dire par ordre croissant ou décroissant, et de préférence par ordre croissant.

L'unité de calcul 48 est configurée pour calculer, pour chaque message acquis, la table dictionnaire TD et l'au moins une table auxiliaire TAL, TML, TAV parmi la première table auxiliaire TAL, la deuxième table auxiliaire TML et la troisième table auxiliaire TAV.

Selon l'invention, le module de filtrage 44 est alors configuré pour utiliser l'au moins une table auxiliaire TAL, TML, TAV pour la mise en oeuvre de critère(s) de filtrage, c'est-à-dire la mise en oeuvre d'au moins un critère de filtrage.

Avantageusement, le module de filtrage 44 est configuré pour utiliser au moins deux tables auxiliaires TAL, TML, TAV distinctes parmi la première table auxiliaire TAL, la deuxième table auxiliaire TML et la troisième table auxiliaire TAV pour la mise en oeuvre de critère(s) de filtrage. Le module de filtrage 44 est de préférence configuré pour utiliser la première table auxiliaire TAL, la deuxième table auxiliaire TML et la troisième table auxiliaire TAV pour la mise en oeuvre de critère(s) de filtrage.

La table dictionnaire TD, également appelée table lexicale, comporte, pour chacun des niveaux N1, N2, N3, N4, N5, une liste de valeur(s) fixe(s) contenue(s) dans ledit message, chaque valeur fixe appartenant à un ensemble de valeurs prédéfinies associé au protocole de communication. La table dictionnaire TD comporte par exemple, pour chaque valeur fixe, un identifiant de ladite valeur fixe.

Autrement dit, la table dictionnaire TD contient pour chaque niveau de l'arbre AM un encodage associé aux valeurs pouvant être trouvées dans le message correspondant à cet arbre AM.

La première table auxiliaire TAL comporte, pour chacun des niveaux N1, N2, N3, N4, N5 et chaque valeur fixe de la table dictionnaire TD, un identifiant de chacun du ou des champs contenant ladite valeur fixe.

La première table auxiliaire TAL, également appelée table d'accès au lexical, offre alors, pour chaque niveau, pour chaque valeur de la table dictionnaire TD un accès direct vers la ou les champs de la table principale TP contenant cette valeur de la table dictionnaire TD, permettant ainsi d'avoir un accès rapide et direct aux éléments du message ayant cette valeur de la table dictionnaire TD. Cet accès se matérialise typiquement par un pointeur vers le champ de la table principale TP. Quand pour une valeur fixe respective de la table dictionnaire TD, le message ne contient pas de champ avec cette valeur, la valeur 'VIDE' est renseignée dans la première table auxiliaire TAL pour ladite valeur fixe de la table dictionnaire TD.

La deuxième table auxiliaire TML comporte, pour chaque branche du message, une liste des valeurs fixes contenues dans les champs de ladite branche. Ladite liste des valeurs fixes est par exemple ordonnée depuis le champ racine jusqu'au champ feuille respectif. Dans la deuxième table auxiliaire TML, pour chaque branche du message, la liste des valeurs fixes est stockée par exemple sous forme d'une liste des identifiants desdites valeurs fixes.

La deuxième table auxiliaire TML représente alors une description de chaque branche de l'arbre AM, cette description se faisant en utilisant les valeurs fixes de la table dictionnaire TD.

En complément facultatif, l'unité de calcul 48 est configurée en outre pour ordonner selon un ordre monotone les listes des valeurs fixes de la deuxième table auxiliaire TML, en commençant par comparer la première valeur fixe de chacune des listes, puis en passant successivement aux valeurs suivantes desdites listes. Ceci permet de faciliter des recherches nécessitées par un ou plusieurs critères de filtrage.

Selon ce complément facultatif, la deuxième table auxiliaire TML est de préférence triée par ordre croissant des identifiants des valeurs fixes, comme illustré par exemple avec la table 3 ci-après.

La troisième table auxiliaire TAV comporte, pour chacun des niveaux N1, N2, N3, N4, N5, une liste de valeur(s) représentative(s) de valeur(s) variable(s) contenue(s) dans ledit message. Chaque valeur variable est distincte de l'ensemble de valeurs prédéfinies associé au protocole de communication. Autrement dit, chaque valeur variable n'appartient pas à l'ensemble de valeurs prédéfinies associé au protocole de communication correspondant. En d'autres termes, chaque valeur variable est une valeur qui n'est pas fixée par le protocole de communication correspondant, mais devant néanmoins généralement respecter une certaine syntaxe. C'est par exemple le cas du nom d'un aéroport dans un plan de vol selon le protocole ARINC 702.

Dans l'exemple de la figure 2, les champs avec valeur variable correspondent aux cases claires, et les champs avec valeur fixe (prévue par le protocole de communication) correspondent aux cases foncées.

La troisième table auxiliaire TAV comporte par exemple en outre, pour chaque valeur représentative de valeur(s) variable(s), l'identifiant de chacun du ou des champs contenant une valeur variable représentée par ladite valeur représentative.

La troisième table auxiliaire TAV, également appelée table d'accès aux variables, permet alors d'avoir un accès aux valeurs variables de la table principale TP.

En complément facultatif, la valeur représentative de la valeur variable n'est pas la valeur variable elle-même, mais une valeur calculée pour représenter ladite valeur variable, cette valeur calculée étant également appelée empreinte. Cela permet ainsi, lors de la mise en oeuvre d'un ou plusieurs critères de filtrage, de faciliter la recherche de la valeur variable dans un ensemble de valeurs variables de tailles diverses en se limitant à rechercher sa valeur représentative, ou empreinte. Cette recherche est encore améliorée en ayant des empreintes de tailles fixes et triées, ce qui permet par exemple d'effectuer des recherches par dichotomie.

En variante, la valeur représentative de la valeur variable est la valeur variable elle-même.

Selon complément facultatif, l'unité de calcul 48 est par exemple configurée pour calculer chaque valeur représentative de valeur variable en appliquant une opération OU-EXCLUSIF, également notée XOR, à ladite valeur variable.

Selon ce complément facultatif, l'opération XOR est par exemple appliquée sur des mots de 32bits pour construire une empreinte dénommée XORrec. Cette empreinte XORrec est constituée des XOR des parties successives de mots de 32 bits de la valeur variable. Même si plusieurs valeurs variables peuvent avoir la même empreinte XORrec, deux valeurs variables distinctes ont généralement rarement la même empreinte XORrec.

Selon ce complément facultatif, à titre d'exemple, l'empreinte XORec pour la valeur variable LFPO, notée XORec(LFPO), est alors cette valeur variable LFPO puisque sa taille est inférieure ou égale à 32 bits. L'empreinte XORec pour la valeur variable AMB010-CDN170, notée XORec(AMB010-CDN170), est obtenue en appliquant les opérations XOR de la manière suivante : AMB0 **XOR** 10-C **XOR** DN17 **XOR** 0.

Préférentiellement, la troisième table auxiliaire TAV est triée par ordre monotone, et de préférence par ordre croissant, des valeurs représentatives calculées.

L'homme du métier observera étant donné que plusieurs valeurs variables peuvent avoir la même valeur représentative, le module de filtrage 44 est configuré pour, après identification du champ correspondant à la valeur représentative d'une valeur variable recherchée, accéder au champ identifié dans la table principale TP afin de vérifier que le champ identifié correspond bien à la valeur variable recherchée, et donc que la valeur représentative représentait bien cette valeur variable recherchée.

À titre d'exemple, l'homme du métier comprendra que, pour rechercher les valeurs variables du quatrième niveau N4 ayant pour valeur « LMG4B », le module de filtrage 44 recherche la valeur représentative XORec(LM4GB) dans le quatrième niveau N4 de la troisième table auxiliaire TAV.

Le module de transmission 45 est configuré pour transmettre, à destination du destinataire correspondant, tel que le système avionique 20 correspondant, chaque message validé par le module de filtrage 44.

Le module de transmission 45 est typiquement configuré pour transmettre chaque message validé à destination du destinataire correspondant, selon le protocole de communication avionique respectif, c'est-à-dire le protocole de communication avionique correspondant à celui selon lequel le message a été précédemment acquis par le module d'acquisition 42.

En complément facultatif, le module d'obtention est configuré pour obtenir le jeu de paramètre(s) de filtrage associé au jeu de critère(s) de filtrage.

Selon ce complément facultatif, le module de filtrage 44 est alors configuré pour filtrer chaque message selon le jeu de critère(s) de filtrage paramétré via le jeu de paramètre(s) de filtrage qui a été obtenu par le module d'obtention.

Selon ce complément facultatif, le module d'obtention est par exemple configuré pour obtenir ledit jeu de paramètre(s) de filtrage depuis un dispositif électronique 60 externe à la passerelle 30. Avantageusement, le module d'obtention est configuré pour vérifier un certificat d'authentification et/ou un certificat d'intégrité pour chaque jeu de paramètre(s) de filtrage, et pour valider alors un jeu respectif de paramètre(s) de filtrage seulement si son certificat d'authentification et/ou son certificat d'intégrité sont valides.

Le certificat d'authentification permet de vérifier que le jeu respectif de paramètre(s) de filtrage est un jeu authentique émis depuis une source reconnue, et non un jeu malfaisant émis depuis une source attaquante. Le certificat d'authentification est par exemple de type RSA à 4096 bits.

Le certificat d'intégrité permet de vérifier que le jeu respectif de paramètre(s) de filtrage est un jeu intègre qui n'a pas été corrompu lors de sa transmission depuis le dispositif électronique 60. Le certificat d'intégrité est par exemple de type SHA-2 (de l'anglais *Secure Hash Algorithm*).

Le dispositif électronique 60 est connecté à la passerelle de communication 30. Le dispositif électronique 60 est typiquement inclus dans le domaine ouvert 18, et aisément accessible par un utilisateur, pour pouvoir stocker dans une mémoire (non représentée) dudit dispositif 60 de nouveaux jeux de paramètre(s) de filtrage et/ou modifier un ou plusieurs jeux de paramètre(s) de filtrage déjà stockés dans cette mémoire. L'utilisateur est typiquement un membre de l'équipage de l'aéronef 5, tel que le pilote de l'aéronef 5, ou encore un opérateur configurant l'aéronef 5 préalablement au vol.

Des exemples de valeurs fixes susceptibles d'être contenues dans la table dictionnaire TD et selon les niveaux considérés sont présentés ci-après pour les protocoles ARINC 702, SNMP et ARINC 739.

Un message ARINC 702 est constitué des champs suivants :
- un identifiant de message intégré ou IMI (de l'anglais *Imbedded Message Identifier*) : il s'agit d'une chaîne de trois caractères alphanumériques utilisée pour identifier le contenu relatif du message, avec des valeurs telles que FPN, PER, LDI, POS, etc. L'identifiant de message intégré est placé au début du message ARINC 702 et est immédiatement suivi du séparateur de barre oblique ("/") *;*
- un ou plusieurs identifiants d'élément intégré ou IEI (de l'anglais *Imbedded Element Identifier*) : chaque IEI est une chaîne de deux caractères alphanumériques utilisée pour identifier un groupe d'un ou plusieurs éléments, avec des valeurs telles que FN, RP, RW, RI, RA, etc. Chaque IEI est immédiatement suivi des données relatives au type d'IEI, qui peuvent être un seul paramètre ou un groupe de paramètres. À la fin de chaque groupe d'éléments, si un IEI suit le séparateur de barre oblique ("/") est inséré entre ; et
- un contrôle de redondance cyclique (CRC) de bout en bout à quatre caractères.

Pour les messages d'initialisation de plan de vol (de l'anglais *Flight Plan Initialization*), les IEI RP/RI/RA contiennent également des identifiants d'élément de plan de vol ou FPEI (de l'anglais *Flight Plan Element Identifier*) qui sont des marqueurs spéciaux identifiant les différents types d'éléments de plan de vol ou FPE (de l'anglais *Flight Plan Element*)*,* avec des valeurs telles que CR, DA, F, WS, etc. Chaque FPEI est immédiatement suivi du séparateur deux-points (":") puis des données de l'élément du plan de vol. Le séparateur de deux points est également placé à la fin des données de l'élément de plan de vol si un autre FPEI suit.

Pour le protocole ARINC 702, le premier niveau N1 est alors le niveau correspondant à l'IMI, le deuxième niveau N2 est celui correspondant aux IEI, et le troisième niveau N3 et celui correspondant aux FPEI. Les valeurs fixes susceptibles d'être contenues dans la table dictionnaire TD sont alors notamment « FPN », « PER », « LDI », « POS » pour le premier niveau N1 ; « FN », « RP », « RW » pour le deuxième niveau N2 ; et « CR », « DA », « F », « WS » pour le troisième niveau N3.

Par analogie, pour le protocole SNMP, les valeurs fixes susceptibles d'être contenues dans la table dictionnaire TD sont alors notamment « Version », « Communauty », « Request » pour le premier niveau N1 ; « Private », « PDU_Type », « ID », « Error » « Object List » pour le deuxième niveau N2 ; et « GetReq », « Object_ID », « Value » pour le troisième niveau N3.

Par analogie encore, pour le protocole ARINC 739, les valeurs fixes susceptibles d'être contenues dans la table dictionnaire TD sont alors notamment « Line text », pour le premier niveau N1 ; « Initial_charac_pos », « Line_number », « Function », « Color » « Charac » pour le deuxième niveau N2 ; et « Underscore », « Reverse », « Flashing », « Black », « 0 », « Cyan », « Yellow », « Green », « Magenta », « Amber », « White » pour le troisième niveau N3.

Dans l'exemple de la figure 2, l'arbre AM représenté correspond au message suivant, qui est un message selon le protocole ARINC 702 : *« FPN*/*RP:CR:TLSCDG:DA:LFBO:AA:LFPG:R:14R:D:LMG4B.AMB:F:LMG,N43230E0012 89..AMB..AMB010-CDN170* /*RA:CR:CDGORY:DA:LFPG:AA:LFPO*/*MWLFBO,LFPG,P110* »
où FPN précise que c'est un plan de vol
RP identifie la 'Route Active'
:CR: identifie la 'Company Route'
TLSCDG : est une valeur variable
DA : identifie l'aéroport de destination
FBO : est une valeur variable
.. : identifie 'Direct to Waypoint', et
AMB : est une valeur variable.

A partir de cet exemple de la figure 2, l'unité de calcul 48 calcule alors la table dictionnaire TD correspondant à la table 1 suivante, où les valeurs fixes associées à chaque niveau N1, N2, N3 et N4 sont listées verticalement par niveau.

**[Table 1]**

| **N1** | **N2** | **N3** | **N4** |
|---|---|---|---|
| 1 FPN | 1 MW | 1 :AA: | 1 . |
| | 2 RA | 2 :CR: | |
| | 3 RP | 3 :D: | |
| | | 4 :DA: | |
| | | 5 :F: | |
| | | 6 :R: | |
| | | 7 .. | |
| | | 8 :W: | |

Toujours à partir de cet exemple de la figure 2, l'unité de calcul 48 calcule alors la première table auxiliaire TAL correspondant à la table 2 suivante, où les identifiants de champ sont indiqués entre parenthèses et listés verticalement par niveau.

**[Table 2]**

| **N1** | **N2** | **N3** | **N4** |
|---|---|---|---|
| 1 (0) | 1 (27) | 1 (6) (25) | 1 (12) |
| | 2 (20) | 2 (2) (21) | |
| | 3 (1) | 3 (10) | |
| | | 4 (4) (23) | |
| | | 5 (14) | |
| | | 6 (8) | |
| | | 7 (16) (18) | |
| | | 8 VIDE | |

À titre d'exemple, l'homme du métier observera alors que, pour le troisième niveau N3, la valeur 4 de la table dictionnaire TD, qui est associée à la valeur fixe « :DA: » d'après la table 1 ci-dessus, pointe vers les champs 4 et 23 de la table principale TP, correspondant aux deux champs encerclés de l'arbre AM de la figure 2. À titre d'autre exemple, pour le deuxième niveau N2, la valeur 2 de la table dictionnaire TD, qui est associée à la valeur fixe « RA » d'après la table 1 ci-dessus, pointe vers le champ 20 de la table principale TP.

Sur la représentation de l'arbre AM de la figure 2, les identifiants de champ sont indiqués à gauche des champs, et les valeurs indiquées à droite de certains champs représentent l'adresse d'une cellule mémoire contenant un champ respectif, chaque valeur indiquée à droite formant autrement dit un pointeur de la cellule mémoire contenant le champ respectif.

A partir de cet exemple de la figure 2, l'unité de calcul 48 calcule ensuite la deuxième table auxiliaire TML correspondant à la table 3 suivante, où les séquences correspondant aux différentes branches de l'arbre AM sont listées les unes à la suite des autres.

**[Table 3]**

| |
|---|
| 1 1 |
| 1 2 1 |
| 1 2 2 |
| 1 2 4 |
| 1 3 1 |
| 1 3 2 |
| 1 3 3 |
| 1 3 3 1 |
| 1 3 4 |
| 1 3 5 |
| 1 3 6 |
| 1 3 7 |

À titre d'exemple, l'homme du métier comprendra que la séquence « 1 2 4 » représente la branche « FPN RA :DA: » de l'arbre AM de la figure 2. En effet, dans cette séquence, le chiffre 1 étant en première position dans la séquence, correspond au premier niveau N1. Ce chiffre 1 représente alors la valeur d'identifiant 1 du premier niveau N1 de la table dictionnaire TD, soit la valeur fixe « FPN » d'après la table 1 ci-dessus. Ensuite, le chiffre 2, en deuxième position dans cette séquence, correspond au deuxième niveau N2, et représente donc la valeur d'identifiant 2 du deuxième niveau N2 de la table dictionnaire TD, soit la valeur fixe « RA » d'après la table 1. Enfin, le chiffre 4, en troisième position dans la séquence, correspond au troisième niveau N3, et représente par conséquent la valeur d'identifiant 4 du troisième niveau N3 de la table dictionnaire TD, soit la valeur fixe « :DA : » d'après la table 1.

Toujours à partir de cet exemple de la figure 2, l'unité de calcul 48 calcule enfin la troisième table auxiliaire TAV correspondant à la table 4 suivante, où les valeurs représentatives de valeurs variables sont listées verticalement par niveau, et le ou les identifiants de champ associés à chaque valeur représentative sont indiqués entre parenthèses et en regard de la valeur représentative associée.

**[Table 4]**

| **N1** | **N2** | **N3** | **N4** | **N5** |
|---|---|---|---|---|
| 1 VIDE | 1 VIDE | 1 LFPO (28) | 1 14R (9) | 1 AMB (13) |
| | | 2 LFPG (29) | 2 XORrec(AMB010-CDN170) (19) | |
| | | 3 P110 (30) | 3 XORrec(CDGORY) (22) | |
| | | | 4 XORrec(TLSCDG) (3) | |
| | | | 5 LFPO (5) (26) | |
| | | | 6 LFPG (7) (24) | |
| | | | 7 XORrec(LMG4B) (11) (15) | |
| | | | 8 XORrec(CDGORY) (22) | |

À titre d'exemple, l'homme du métier observera alors que la valeur représentative LFPO qui représente la valeur variable LFPO (de taille inférieure ou égale à 32 bits) pointe vers le champ 28 de la table principale TP pour le troisième niveau N3, et vers les champs 5 et 26 de la table principale TP pour le quatrième niveau N4. À titre d'autre exemple, la valeur représentative XORrec(LMG4B), égale à LMG4 **XOR** B et qui représente la valeur variable LMG4B (de taille supérieure à 32 bits), pointe vers les champs 11 et 15 de la table principale TP pour le quatrième niveau N4.

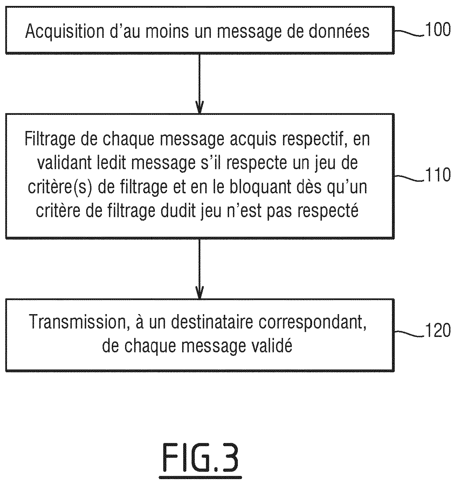

Le fonctionnement de la passerelle de communication 30 selon l'invention va être à présent décrit en regard de la figure 3 représentant un organigramme du procédé de filtrage de message(s) de données au sein de l'installation de communication avionique 10, ledit procédé de filtrage étant mis en oeuvre par la passerelle de communication 30.

Lors d'une étape initiale 100, la passerelle de communication 30 acquiert, via son module d'acquisition 42 et typiquement de la part d'un appareil électronique 25 respectif appartenant au domaine ouvert 18, au moins un message de données à destination d'un destinataire, tel qu'un système avionique 20 respectif appartenant au domaine avionique 15.

La passerelle de communication 30 passe ensuite à l'étape de filtrage 110 lors de laquelle elle filtre, via son module de filtrage 44, chaque message acquis respectif en validant ledit message s'il respecte un jeu de critère(s) de filtrage et en le bloquant dès qu'un critère de filtrage dudit jeu n'est pas respecté.

Lors de l'étape de filtrage 110, pour chaque message acquis, l'unité de génération 46 génère la table principale TP, puis l'unité de calcul 48 calcule la table dictionnaire TD et l'au moins une table auxiliaire TAL, TML, TAV parmi la première table auxiliaire TAL, la deuxième table auxiliaire TML et la troisième table auxiliaire TAV. Lors de cette étape de filtrage 110, l'unité de calcul 48 calcule de préférence la table dictionnaire TD, la première table auxiliaire TAL, la deuxième table auxiliaire TML et la troisième table auxiliaire TAV pour chaque message acquis.

Selon l'invention, lors de l'étape de filtrage 110, le module de filtrage 44 utilise alors ensuite l'au moins une table auxiliaire TAL, TML, TAV pour la mise en oeuvre d'au moins un critère de filtrage.

Avantageusement, le module de filtrage 44 utilise au moins deux tables auxiliaires TAL, TML, TAV distinctes parmi la première table auxiliaire TAL, la deuxième table auxiliaire TML et la troisième table auxiliaire TAV pour la mise en oeuvre de critère(s) de filtrage.

Le module de filtrage 44 utilise de préférence la première table auxiliaire TAL, la deuxième table auxiliaire TML et la troisième table auxiliaire TAV pour la mise en oeuvre du jeu de critère(s) de filtrage au global. L'homme du métier comprendra bien entendu que les trois tables auxiliaires TAL, TML, TAV ne sont pas nécessairement toutes utilisées à la fois pour chaque critère de filtrage, et que la première table auxiliaire TAL est par exemple utilisée pour un premier critère de filtrage, la deuxième table auxiliaire TML est par exemple utilisée pour un deuxième critère de filtrage distinct du premier, la troisième table auxiliaire TAV étant par exemple utilisée pour un troisième critère de filtrage distinct des premier et deuxième critères de filtrage. Bien entendu également, pour certain(s) critère(s) de filtrage, plusieurs tables auxiliaires parmi la première table auxiliaire TAL, la deuxième table auxiliaire TML et la troisième table auxiliaire TAV pourront être utilisées.

À l'issue de l'étape de filtrage 110, la passerelle de communication 30 transmet, via son module de transmission 45 et à destination du destinataire, le message acquis lors de l'étape d'acquisition 100 si celui-ci a été ensuite validé lors de l'étape de filtrage 110, c'est-à-dire si ledit message respectait le jeu de critère(s) de filtrage.

Ainsi, la première table auxiliaire TAL, la deuxième table auxiliaire TML et/ou la troisième table auxiliaire TAV permettent d'effectuer un filtrage de message avec une durée d'exécution maitrisée. En effet au lieu de parcourir le message pour chaque critère de filtrage à appliquer, entrainant un temps d'exécution variable en fonction de la taille du message et de la position des champs cherchés dans le message, le module de filtrage 44 utilise directement la première table auxiliaire TAL, la deuxième table auxiliaire TML et/ou la troisième table auxiliaire TAV pour effectuer le critère de filtrage concerné. Ces tables auxiliaires TAL, TML, TAV s'exécutent dans un temps beaucoup plus déterministe, car elles sont moins sensibles à la taille du message ou à l'emplacement des champs dans le message (qu'ils se trouvent en début ou en fin).

A titre d'exemple de filtrage, pour pouvoir identifier si le nombre de 'Direct to Waypoint' d'un message ARINC 702 ne dépasse pas une borne fixée, le module de filtrage 44 la valeur correspondant 'Direct to Waypoint' dans la table dictionnaire TD, soit la valeur « .. » d'identifiant 7 du troisième niveau N3 dans la table dictionnaire TD. A partir de là, il suffit que le module de filtrage 44 détermine le nombre de champs contenus correspondant à l'identifiant 7 pour le troisième niveau N3 dans la première table auxiliaire TAL, puis vérifie que ce nombre est inférieur à la borne fixée. Dans cet exemple, parmi les trois tables auxiliaires TAL, TML, TAV, seule la première table auxiliaire TAL est utilisée pour vérifier si ce critère de filtrage est respecté ou non, et cette vérification est particulièrement simple puisqu'il suffit de dénombrer un nombre d'éléments dans cette première table auxiliaire TAL, puis de comparer ce nombre à un seuil.

La première table auxiliaire TAL permet alors de détecter plus efficacement la présence ou non d'une valeur prédéfinie donnée dans le message, et si une telle valeur est présente d'abord en outre le nombre d'occurrences de cette valeur.

A titre d'autre exemple de filtrage, pour savoir si une combinaison particulière de champs est présente dans le message, il suffit de voir si le motif associé à cette combinaison est présent la deuxième table auxiliaire TML. Par exemple, pour vérifier si la séquence « FPN RA :DA : » est présente ou non dans le message, il suffit que le module de filtrage 44 détermine si la séquence« 1 2 4 » est présente la deuxième table auxiliaire TML Dans cet exemple, parmi les trois tables auxiliaires TAL, TML, TAV, seule la deuxième table auxiliaire TML est utilisée pour vérifier si ce critère de filtrage est respecté ou non, et cette vérification est également simple puisqu'il suffit de déterminer si une séquence donnée est présente ou non dans cette deuxième table auxiliaire TML.

La deuxième table auxiliaire TML permet donc d'appliquer plus efficacement un filtre sur un motif particulier de champs dans le message.

A titre d'autre exemple encore de filtrage, pour savoir si le nom d'un aéroport particulier est présent, la troisième table auxiliaire TAV permet de rapidement accéder aux valeurs variables du quatrième niveau N4 associées aux noms des aéroports ayant la même valeur représentative XORrec. Le module de filtrage 44 vérifie juste ensuite, en accédant à la table principale TP, pour vérifier que le nom de l'aéroport est exactement celui recherché (plusieurs noms pouvant avoir la même valeur représentative XORrec). Dans cet exemple, parmi les trois tables auxiliaires TAL, TML, TAV, seule la troisième table auxiliaire TAV est utilisée pour vérifier si ce critère de filtrage est respecté ou non, et cette vérification est à nouveau simple puisqu'il suffit de déterminer si une valeur représentative est présente ou non dans cette troisième table auxiliaire TAV, puis d'effectuer une vérification complémentaire dans la table principale TP.

La troisième table auxiliaire TAV permet donc de filtrer plus efficacement les valeurs variables dans le message.

L'utilisation d'au moins une table auxiliaire TAL, TML, TAV pour la mise en oeuvre de critère(s) de filtrage permet alors de déterminer beaucoup plus rapidement où se trouve le champ ou bien la valeur sur lequel le critère de filtrage est à appliquer. En effet, chaque critère de filtrage est mis en œuvre en accédant à ce champ ou à cette valeur directement via l'au moins une table auxiliaire TAL, TML, TAV, comme cela ressort notamment des exemples précédents, plutôt qu'en ayant à chaque fois à parcourir intégralement le message faisant l'objet du filtrage.

L'homme du métier comprendra alors que le gain en temps de traitement est d'autant plus important que le message est long comme dans le domaine avionique, où un seul message peut présenter une taille de plusieurs kilooctets. Le gain en temps de traitement croit également avec le nombre de critères de filtrage à appliquer à un même message.

On conçoit ainsi que la passerelle de communication 30 selon l'invention permet donc de réduire le temps de traitement nécessaire pour la réalisation du filtrage, notamment pour être plus efficace vis-à-vis d'un risque de cyberattaque visant à entraîner un dysfonctionnement des systèmes avioniques 20.

## Revendications

1. Passerelle électronique de communication (30) destinée à être embarquée à bord d'un aéronef (5), la passerelle (30) comprenant :
- un module d'acquisition (42) configuré pour acquérir au moins un message de données ; chaque message étant selon un protocole de communication et comportant un en-tête et une partie utile incluant une pluralité de champs successifs ;
- un module de filtrage (44) connecté en sortie du module d'acquisition (42) et configuré pour filtrer chaque message acquis respectif, en validant ledit message s'il respecte un jeu de critère(s) de filtrage et en le bloquant dès qu'un critère de filtrage dudit jeu n'est pas respecté ;
- un module de transmission (45) connecté en sortie du module de filtrage (44) et configuré pour transmettre, à un destinataire (20) correspondant, chaque message validé par le module de filtrage (44) ;
**caractérisée en ce que** le module de filtrage (44) comporte :
- une unité de génération (46) configurée pour générer une table principale (TP) pour chaque message acquis ; la table principale (TP) représentant un arbre (AM) des champs de la partie utile dudit message selon un ensemble de niveaux (N1, N2, N3, N4, N5) associé au protocole de communication, l'arbre (AM) comportant une ou plusieurs branches ;
- une unité de calcul (48) configurée pour calculer, pour chaque message acquis, une table dictionnaire (TD) et au moins une table auxiliaire (TAL, TML, TAV) parmi une première table auxiliaire (TAL), une deuxième table auxiliaire (TML) et une troisième table auxiliaire (TAV) ;
la table dictionnaire (TD) comportant, pour chacun des niveaux (N1, N2, N3, N4, N5), une liste de valeur(s) fixe(s) contenue(s) dans ledit message, chaque valeur fixe appartenant à un ensemble de valeurs prédéfinies associé au protocole de communication ;
la première table auxiliaire (TAL) comportant, pour chacun des niveaux (N1, N2, N3, N4, N5) et chaque valeur fixe de la table dictionnaire (TD), un identifiant de chacun du ou des champs contenant ladite valeur fixe ;
la deuxième table auxiliaire (TML) comportant, pour chaque branche du message, une liste des valeurs fixes contenues dans les champs de ladite branche ; et
la troisième table auxiliaire (TAV) comportant, pour chacun des niveaux (N1, N2, N3, N4, N5), une liste de valeur(s) représentative(s) de valeur(s) variable(s) contenue(s) dans ledit message, chaque valeur variable étant distincte de l'ensemble de valeurs prédéfinies associé au protocole de communication ; et
**en ce que** le module de filtrage (44) est configuré pour utiliser l'au moins une table auxiliaire (TAL, TML, TAV) pour la mise en oeuvre de critère(s) de filtrage.

2. Passerelle (30) selon la revendication 1, dans laquelle le module de filtrage (44) est configuré pour utiliser au moins deux tables auxiliaires (TAL, TML, TAV) distinctes parmi la première table auxiliaire (TAL), la deuxième table auxiliaire (TML) et la troisième table auxiliaire (TAV) pour la mise en oeuvre de critère(s) de filtrage ;
le module de filtrage (44) étant de préférence configuré pour utiliser chacune des tables auxiliaires (TAL, TML, TAV) parmi la première table auxiliaire (TAL), la deuxième table auxiliaire (TML) et la troisième table auxiliaire (TAV) pour la mise en oeuvre de critère(s) de filtrage.

3. Passerelle (30) selon la revendication 1 ou 2, dans laquelle l'unité de calcul (48) est configurée en outre pour ordonner selon un ordre monotone les listes des valeurs fixes de la deuxième table auxiliaire (TML), en commençant par comparer la première valeur fixe de chacune des listes, puis en passant successivement aux valeurs suivantes desdites listes.

4. Passerelle (30) selon l'une quelconque des revendications précédentes, dans laquelle la table dictionnaire (TD) comporte, pour chaque valeur fixe, un identifiant de ladite valeur fixe ; et dans la deuxième table auxiliaire (TML), pour chaque branche du message, la liste des valeurs fixes est stockée sous forme d'une liste des identifiants desdites valeurs fixes.

5. Passerelle (30) selon l'une quelconque des revendications précédentes, dans laquelle l'unité de calcul (48) est configurée en outre pour calculer chaque valeur représentative de valeur variable en appliquant une opération OU-EXCLUSIF (XOR) à ladite valeur variable.

6. Passerelle (30) selon l'une quelconque des revendications précédentes, dans laquelle la troisième table auxiliaire (TAV) comporte en outre, pour chaque valeur représentative de valeur(s) variable(s), l'identifiant de chacun du ou des champs contenant une valeur variable représentée par ladite valeur représentative.

7. Passerelle (30) selon l'une quelconque des revendications précédentes, dans laquelle l'aéronef (5) comporte une installation de communication (10) compartimentée en un domaine avionique (15) et un domaine ouvert (18) externe au domaine avionique (15), l'installation de communication (10) comportant plusieurs systèmes avioniques (20) appartenant au domaine avionique (15), un ou plusieurs appareils électroniques (25) appartenant au domaine ouvert (18), la passerelle (30) étant apte à être connectée entre le ou les appareils électroniques (25) et les systèmes avioniques (20),
le domaine avionique (15) est un domaine correspondant à un niveau de sécurité le plus élevé à bord de l'aéronef (5) ;
le domaine avionique (15) étant de préférence le domaine ACD selon la norme ARINC 811 du 20 décembre 2005.

8. Aéronef (5) comprenant une installation de communication (10) compartimentée en un domaine avionique (15) et un domaine ouvert (18) externe au domaine avionique (15), l'installation de communication (10) comportant plusieurs systèmes avioniques (20) appartenant au domaine avionique (15), un ou plusieurs appareils électroniques (25) appartenant au domaine ouvert (18), et une passerelle électronique de communication (30) connectée entre le ou les appareils électroniques (25) et les systèmes avioniques (20),
**caractérisé en ce que** la passerelle de communication (30) est selon l'une quelconque des revendications précédentes.

9. Procédé de filtrage de message(s) de données au sein d'une installation de communication avionique (10) destinée à être embarquée à bord d'un aéronef (5), le procédé de filtrage étant mis en oeuvre par une passerelle électronique de communication (30) et comprenant les étapes suivantes :
- acquisition (100) d'au moins un message de données ; chaque message étant selon un protocole de communication et comportant un en-tête et une partie utile incluant une pluralité de champs successifs ;
- filtrage (110) de chaque message acquis respectif, en validant ledit message s'il respecte un jeu de critère(s) de filtrage et en le bloquant dès qu'un critère de filtrage dudit jeu n'est pas respecté ;
- transmission (120), à un destinataire (20) correspondant, de chaque message validé ;
**caractérisé en ce que** l'étape de filtrage (110) comporte les sous-étapes suivantes :
- génération d'une table principale (TP) pour chaque message acquis ; la table principale (TP) représentant un arbre (AM) des champs de la partie utile dudit message selon un ensemble de niveaux (N1, N2, N3, N4, N5) associé au protocole de communication, l'arbre (AM) comportant une ou plusieurs branches ;
- calcul, pour chaque message acquis, d'une table dictionnaire (TD) et d'au moins une table auxiliaire (TAL, TML, TAV) parmi une première table auxiliaire (TAL), une deuxième table auxiliaire (TML) et une troisième table auxiliaire (TAV) ;
la table dictionnaire (TD) comportant, pour chacun des niveaux (N1, N2, N3, N4, N5), une liste de valeur(s) fixe(s) contenue(s) dans ledit message, chaque valeur fixe appartenant à un ensemble de valeurs prédéfinies associé au protocole de communication ;
la première table auxiliaire (TAL) comportant, pour chacun des niveaux (N1, N2, N3, N4, N5) et chaque valeur fixe de la table dictionnaire (TD), l'identifiant de chacun du ou des champs contenant ladite valeur fixe ;
la deuxième table auxiliaire (TML) comportant, pour chaque branche du message, une liste des valeurs fixes contenues dans les champs de ladite branche ; et
la troisième table auxiliaire (TAV) comportant, pour chacun des niveaux (N1, N2, N3, N4, N5), une liste de valeur(s) représentative(s) de valeur(s) variable(s) contenue(s) dans ledit message, chaque valeur variable étant distincte de l'ensemble de valeurs prédéfinies associé au protocole de communication ; et
**en ce que** l'au moins une table auxiliaire (TAL, TML, TAV) est utilisée pour la mise en oeuvre de critère(s) de filtrage.

10. Programme d'ordinateur comportant des instructions logicielles qui, lorsqu'elles sont exécutées par un ordinateur, mettent en oeuvre un procédé selon la revendication précédente.

## Patentansprüche

1. Elektronisches Kommunikationsgateway (30) zum Mitführen an Bord eines Flugzeugs (5), wobei das Gateway (30) umfasst:
- ein Erfassungsmodul (42), das so konfiguriert ist, dass es mindestens eine Datennachricht erfasst; wobei jede Nachricht einem Kommunikationsprotokoll entspricht und einen Kopfteil und einen Nutzteil mit mehreren aufeinanderfolgenden Feldern umfasst;
- ein Filtermodul (44), das am Ausgang des Erfassungsmoduls (42) angeschlossen und so konfiguriert ist, dass es jede jeweilige erfasste Nachricht filtert, indem es die Nachricht freigibt, wenn sie einen Satz von Filterkriterien erfüllt, und sie blockiert, sobald ein Filterkriterium des Satzes nicht erfüllt wird;
- ein Übertragungsmodul (45), das am Ausgang des Filtermoduls (44) angeschlossen und so konfiguriert ist, dass es jede durch das Filtermodul (44) bestätigte Nachricht an einen entsprechenden Empfänger (20) überträgt;
**dadurch gekennzeichnet, dass** das Filtermodul (44) Folgendes umfasst:
- eine Erzeugungseinheit (46), die so konfiguriert ist, dass sie eine Haupttabelle (TP) für jede erfasste Nachricht erzeugt; die Haupttabelle (TP) repräsentiert einen Baum (AM) der Felder des Nutzteils der Nachricht gemäß einer Gruppe von Ebenen (N1, N2, N3, N4, N5) darstellt, die dem Kommunikationsprotokoll zugeordnet sind, wobei der Baum (AM) einen oder mehrere Zweige umfasst;
- eine Recheneinheit (48), die konfiguriert ist, um für jede erfasste Nachricht eine Wörterbuchtabelle (TD) und mindestens eine Hilfstabelle (TAL, TML, TAV) aus einer ersten Hilfstabelle (TAL), einer zweiten Hilfstabelle (TML) und einer dritten Hilfstabelle (TAV) zu berechnen;
die Wörterbuchtabelle (TD) für jede der Ebenen (N1, N2, N3, N4, N5) eine Liste von in der Nachricht enthaltenen festen Wert(en) umfasst, wobei jeder feste Wert zu einem Satz vordefinierter Werte gehört, die dem Kommunikationsprotokoll zugeordnet sind;
die erste Hilfstabelle (TAL) für jede der Ebenen (N1, N2, N3, N4, N5) und jeden festen Wert der Wörterbuchtabelle (TD) eine Kennung für jedes des Feldes oder der Felder, die den festen Wert enthalten, umfasst;
die zweite Hilfstabelle (TML), die für jeden Zweig der Nachricht eine Liste der festen Werte enthält, die in den Feldern dieses Zweigs enthalten sind; und
die dritte Hilfstabelle (TAV), die für jede der Ebenen (N1, N2, N3, N4, N5) eine Liste von Wert(en) enthält, die für in der Nachricht enthaltene variable Werte repräsentativ sind, wobei sich jeder variable Wert von dem Satz vordefinierter Werte unterscheidet, der dem Kommunikationsprotokoll zugeordnet ist; und
dass das Filtermodul (44) so konfiguriert ist, dass es die mindestens eine Hilfstabelle (TAL, TML, TAV) für die Implementierung des(der) Filterkriteriums(Filterkriterien) verwendet.

2. Gateway (30) nach Anspruch 1, wobei das Filtermodul (44) so konfiguriert ist, dass es mindestens zwei verschiedene Hilfstabellen (TAL, TML, TAV) aus der ersten Hilfstabelle (TAL), der zweiten Hilfstabelle (TML) und der dritten Hilfstabelle (TAV) für die Implementierung des(der) Filterkriteriums(Filterkriterien) verwendet;
wobei das Filtermodul (44) vorzugsweise konfiguriert ist, um jede der Hilfstabellen (TAL, TML, TAV) aus der ersten Hilfstabelle (TAL), der zweiten Hilfstabelle (TML) und der dritten Hilfstabelle (TAV) für die Implementierung des(der) Filterkriteriums(Filterkriterien) zu verwenden.

3. Gateway (30) nach Anspruch 1 oder 2, wobei die Recheneinheit (48) zusätzlich so konfiguriert ist, dass sie die Listen der festen Werte der zweiten Hilfstabelle (TML) in einer monotonen Reihenfolge anordnet, indem sie zunächst den ersten festen Wert jeder der Listen vergleicht und dann nacheinander zu den nächsten Werten der Listen übergeht.

4. Gateway (30) nach einem der vorhergehenden Ansprüche, wobei die Wörterbuchtabelle (TD) für jeden festen Wert eine Kennung des festen Werts enthält; und in der zweiten Hilfstabelle (TML) für jeden Zweig der Nachricht die Liste der festen Werte als eine Liste der Kennungen der festen Werte gespeichert ist.

5. Gateway (30) nach einem der vorhergehenden Ansprüche, wobei die Recheneinheit (48) zusätzlich so konfiguriert ist, dass sie jeden repräsentativen Wert eines variablen Werts berechnet, indem sie eine EXKLUSIV-ODER-Operation (XOR) auf den variablen Wert anwendet.

6. Gateway (30) nach einem der vorhergehenden Ansprüche, wobei die dritte Hilfstabelle (TAV) außerdem für jeden repräsentativen Wert für einen oder mehrere variable Werte die Kennung jedes der Felder enthält, die einen variablen Wert enthalten, der durch den repräsentativen Wert dargestellt wird.

7. Gateway (30) nach einem der vorhergehenden Ansprüche, wobei das Flugzeug (5) eine Kommunikationsanlage (10) umfasst, die in einen Avionikbereich (15) und einen offenen Bereich (18) außerhalb des Avionikbereichs (15) unterteilt ist, wobei die Kommunikationsanlage (10) mehrere Avioniksysteme (20) umfasst, die zu dem Avionikbereich (15) gehören, ein oder mehrere elektronische Geräte (25), die zu dem offenen Bereich (18) gehören, wobei das Gateway (30) geeignet ist, zwischen dem oder den elektronischen Geräten (25) und den Avioniksystemen (20) verbunden zu werden,
der Avionikbereich (15) ein Bereich ist, der einem höchsten Sicherheitsniveau an Bord des Flugzeugs (5) entspricht;
wobei der Avionikbereich (15) vorzugsweise der ACD-Bereich gemäß der Norm ARINC 811 vom 20. Dezember 2005 ist.

8. Flugzeug (5) mit einer Kommunikationsanlage (10), die in einen Avionikbereich (15) und einen offenen Bereich (18) außerhalb des Avionikbereichs (15) unterteilt ist, wobei die Kommunikationsanlage (10) eine Vielzahl von Systemen (20) umfasst, die zum Avionikbereich (15) gehören, ein oder mehrere elektronische Geräte (25), die zu dem offenen Bereich (18) gehören, und ein elektronisches Kommunikationsgateway (30), das zwischen dem oder den elektronischen Geräten (25) und den Avioniksystemen (20) angeschlossen ist, umfasst,
**dadurch gekennzeichnet, dass** das Kommunikationsgateway (30) gemäß einem der vorherigen Ansprüche ist.

9. Verfahren zum Filtern von Datennachricht(en) innerhalb einer Avionik-Kommunikationsanlage (10), die dazu bestimmt ist, an Bord eines Flugzeuges (5) zu sein, wobei das Filterverfahren von einem elektronischen Kommunikationsgateway (30) durchgeführt wird und die folgenden Schritte umfasst:
- Erfassen (100) mindestens einer Datennachricht; wobei jede Nachricht einem Kommunikationsprotokoll entspricht und einen Kopfteil und einen Nutzteil mit mehreren aufeinanderfolgenden Feldern umfasst;
- Filtern (110) jeder jeweiligen erfassten Nachricht, indem die Nachricht freigegeben wird, wenn sie einen Satz von Filterkriterien erfüllt, und blockiert wird, sobald ein Filterkriterium des Satzes nicht erfüllt ist;
- Übertragen (120) jeder bestätigten Nachricht an einen entsprechenden Empfänger (20);
**dadurch gekennzeichnet, dass** der Filterschritt (110) die folgenden Teilschritte umfasst:
- Generierung einer Haupttabelle (TP) für jede erfasste Nachricht; wobei die Haupttabelle (TP) einen Baum (AM) der Felder des Nutzteils der Nachricht gemäß einer Gruppe von Ebenen (N1, N2, N3, N4, N5) darstellt, die dem Kommunikationsprotokoll zugeordnet sind, wobei der Baum (AM) einen oder mehrere Zweige umfasst;
- Berechnen, für jede erfasste Nachricht, einer Wörterbuchtabelle (TD) und mindestens einer Hilfstabelle (TAL, TML, TAV) aus einer ersten Hilfstabelle (TAL), einer zweiten Hilfstabelle (TML) und einer dritten Hilfstabelle (TAV);
die Wörterbuchtabelle (TD) für jede der Ebenen (N1, N2, N3, N4, N5) eine Liste von in der Nachricht enthaltenen festen Wert(en) umfasst, wobei jeder feste Wert zu einem Satz vordefinierter Werte gehört, die dem Kommunikationsprotokoll zugeordnet sind;
die erste Hilfstabelle (TAL) für jede der Ebenen (N1, N2, N3, N4, N5) und jeden festen Wert der Wörterbuchtabelle (TD) die Kennung jedes des Feldes oder der Felder, die den festen Wert enthalten, enthält;
die zweite Hilfstabelle (TML), die für jeden Zweig der Nachricht eine Liste der festen Werte enthält, die in den Feldern dieses Zweigs enthalten sind; und
die dritte Hilfstabelle (TAV), die für jede der Ebenen (N1, N2, N3, N4, N5) eine Liste von Wert(en) enthält, die für in der Nachricht enthaltene variable Werte repräsentativ sind, wobei sich jeder variable Wert von dem Satz vordefinierter Werte unterscheidet, der dem Kommunikationsprotokoll zugeordnet ist; und
dass die mindestens eine Hilfstabelle (TAL, TML, TAV) für die Implementierung des(der) Filterkriteriums(Filterkriterien) verwendet wird.

10. Computerprogramm, umfassend Softwareanweisungen, die, wenn sie von einem Computer ausgeführt werden, ein Verfahren nach dem vorherigen Anspruch implementieren.

## Claims

1. An electronic communication gateway (30) intended to be carried on board an aircraft (5), the gateway (30) comprising:
- an acquisition module (42) configured to acquire at least one data message; each message being according to a communication protocol and including a header and a payload including a plurality of successive fields;
- a filter module (44) connected to the output of the acquisition module (42) and configured to filter each respective acquired message, validating said message if it complies with a set of filter criteria and blocking it as soon as a filter criterion of said set is not complied with;
- a transmission module (45) connected to the output of the filter module (44) and configured to transmit each message validated by the filter module (44) to a corresponding recipient (20);
**characterized in that** the filter module (44) includes:
- a generation unit (46) configured to generate a main table (TP) for each acquired message; the main table (TP) representing a tree (AM) of the fields of the payload of said message according to a set of levels (N1, N2, N3, N4, N5) related to the communication protocol, the tree (AM) including one or more branches;
- a calculation unit (48) configured to calculate, for each acquired message, a dictionary table (TD) and at least one auxiliary table (TAL, TML, TAV) from among a first auxiliary table (TAL), a second auxiliary table (TML) and a third auxiliary table (TAV);
the dictionary table (TD) including, for each of the levels (N1, N2, N3, N4, N5), a list of fixed values contained in said message, each fixed value belonging to a set of predefined values related to the communication protocol;
the first auxiliary table (TAL) including, for each of the levels (N1, N2, N3, N4, N5) and each fixed value of the dictionary table (TD), an identifier of each field containing said fixed value;
the second auxiliary table (TML) including, for each message branch, a list of the fixed values contained in the fields of said branch; and
the third auxiliary table (TAV) including, for each of the levels (N1, N2, N3, N4, N5), a list of values representative of the variable value(s) contained in said message, each variable value being distinct from the set of predefined values related to the communication protocol; and
**in that** the filter module (44) is configured to use the at least one auxiliary table (TAL, TML, TAV) to implement the filter criteria.

2. The gateway (30) according to claim 1, wherein the filter module (44) is configured to use at least two distinct auxiliary tables (TAL, TML, TAV) from among the first auxiliary table (TAL), the second auxiliary table (TML) and the third auxiliary table (TAV) for implementing the filter criteria;
the filter module (44) preferably being configured to use each of the auxiliary tables (TAL, TML, TAV) from among the first auxiliary table (TAL), the second auxiliary table (TML) and the third auxiliary table (TAV) to implement the filter criteria.

3. The gateway (30) according to claim 1 or 2, wherein the calculation unit (48) is further configured to order according to a monotonic order the lists of fixed values of the second auxiliary table (TML), starting by comparing the first fixed value of each of the lists, then successively moving on to the next values of said lists.

4. The gateway (30) according to any one of the preceding claims, wherein the dictionary table (TD) includes, for each fixed value, an identifier of said fixed value; and in the second auxiliary table (TML), for each message branch, the list of fixed values is stored in the form of a list of identifiers of said fixed values.

5. The gateway (30) according to any one of the preceding claims, wherein the calculation unit (48) is further configured to calculate each value representative of the variable value by applying an OR EXCLUSIVE (XOR) operation to said variable value.

6. The gateway (30) according to any one of the preceding claims, wherein the third auxiliary table (TAV) further includes, for each value representative of the variable value(s), the identifier of each of the fields containing a variable value represented by said representative value.

7. The gateway (30) according to any one of the preceding claims, wherein the aircraft (5) includes a communication installation (10) compartmentalized into an avionics domain (15) and an open domain (18) external to the avionics domain (15), the communication installation (10) including several avionics systems (20) belonging to the avionics domain (15), one or several electronic devices (25) belonging to the open domain (18), the gateway (30) being able to be connected between the electronic device(s) (25) and the avionics systems (20),
the avionics domain (15) is a domain corresponding to the highest level of security on board the aircraft (5);
the avionics domain (15) preferably being the ACD domain according to the ARINC 811 standard of December 20, 2005.

8. An aircraft (5) comprising a communication installation (10) compartmentalized into an avionics domain (15) and an open domain (18) external to the avionics domain (15), the communication installation (10) including several avionics systems (20) belonging to the avionics domain (15), one or more electronic devices (25) belonging to the open domain (18), and an electronic communication gateway (30) connected between the electronic device(s) (25) and the avionics systems (20),
**characterized in that** the communication gateway (30) is according to any one of the preceding claims.

9. A filtering method for data message(s) within an avionics communications installation (10) intended to be carried on board an aircraft (5), the filtering method being implemented by an electronic communications gateway (30) and comprising the following steps:
- acquisition (100) of at least one data message; each message being according to a communication protocol and including a header and a payload including a plurality of successive fields;
- filter (110) each respective acquired message, validating said message if it complies with a set of filter criteria and blocking it as soon as a filter criterion of said set is not complied with;
- transmission (120), to a corresponding recipient (20), of each validated message;
**characterized in that** the filter step (110) includes the following sub-steps:
- generation of a main table (TP) for each acquired message; the main table (TP) representing a tree (AM) of the fields of the payload of said message according to a set of levels (N1, N2, N3, N4, N5) related to the communication protocol, the tree (AM) including one or more branches;
- calculating, for each acquired message, a dictionary table (TD) and at least one auxiliary table (TAL, TML, TAV) from among a first auxiliary table (TAL), a second auxiliary table (TML) and a third auxiliary table (TAV);
the dictionary table (TD) including, for each of the levels (N1, N2, N3, N4, N5), a list of fixed values contained in said message, each fixed value belonging to a set of predefined values related to the communication protocol;
the first auxiliary table (TAL) including, for each of the levels (N1, N2, N3, N4, N5) and each fixed value of the dictionary table (TD), the identifier of each field containing said fixed value;
the second auxiliary table (TML) including, for each message branch, a list of the fixed values contained in the fields of said branch; and
the third auxiliary table (TAV) including, for each of the levels (N1, N2, N3, N4, N5), a list of values representative of the variable value(s) contained in said message, each variable value being distinct from the set of predefined values related to the communication protocol; and
**in that** the at least one auxiliary table (TAL, TML, TAV) is used to implement the filter criteria.

10. A computer program including software instructions which, when executed by a computer, implement a method according to the preceding claim.
